# EUROPEAN PATENT APPLICATION

(11) **EP 1 143 547 A1**
(43) Date of publication of application: **10.10.2001**
(21) Application number: 00961039.5
(22) Date of filing: 14.09.2000
(51) Int. Cl.: H01M 10/40, H01M 4/58, H01M 4/60, H01M 4/38, H01M 4/48, H01M 4/02

(54) **LITHIUM CELL**

(30) Priority: 24.09.1999 JP 27040499; 24.09.1999 JP 27047499
(71) Applicant: MATSUSHITA ELECTRIC INDUSTRIAL CO., LTD., Kadoma-shi, Osaka 571-8501 (JP)
(72) Inventor: NAKAGIRI, Yasushi, Kyotanabe-shi, Kyoto 610-0352 (JP); BITO, Yasuhiko, Minamikawachi-gun, Osaka 587-0032 (JP); MATSUDA, Hiromu, Kawabe-gun, Hyogo 666-0261 (JP)
(74) Representative: Leson, Thomas Johannes Alois, Dipl.-Ing.
(86) International application number: JP0006335
(87) International publication number: WO0122520

(57) **Abstract**

A lithium battery of the present invention comprises: a positive electrode formed from a composite electrode composition comprising sulfur or lithium-containing sulfur represented by the formula (LiₓS)ₙ, wherein 0<x≦2 and n is a natural number, and a metal complex of an organic sulfur compound having a thiol group or thiolate group in the molecule; a negative electrode formed from a lithium-containing composite nitride represented by the general formula Li₃₋ₓMₓN, wherein M represents one transition element selected from the group consisting of Ti, V, Cr, Mn, Fe, Co, Ni and Cu, and x is a real number within a range of 0.1≦x≦0.8; and a lithium ion conductive nonaqueous electrolyte.

## Description

### Technical Field

The present invention relates to a lithium battery using a nonaqueous electrolyte.

### Background Art

In recent years, with the development of mobile communication equipment and portable electronic equipment, there is a significantly increasing demand for lithium batteries as the power source of such equipment. Lithium secondary batteries have a high electromotive force, thereby achieving a high energy density. In particular, so-called lithium ion batteries, which use lithium cobaltate for the positive electrode and a carbon material for the negative electrode, have been widely used at present as the power source of portable electronic equipment. However, with the development of more compact and light-weight portable electronic equipment, there has been an increasing demand for batteries with high energy density, and the development of a novel electrode material having a higher energy density has been expected. Besides, there has been a tendency to decrease the drive voltage for the equipment, and in the present situation the equipment is usable with a voltage ranging from 2 to 2.5 V.

In such a background, various attempts have been made. In particular, since increasing of the energy density of active materials for the positive electrode and negative electrode is directly connected with an increase in the energy density of a battery itself, the development of materials for the positive electrode and negative electrode has been actively carried out.

Known positive electrode materials are oxides and chalcogenide compounds of transition metals, such as lithium nickelate (LiNiO₂), spinel lithium manganate (LiMn₂O₄), V₂O₅, Cr₂O₅, MnO₂, TiS₂ and MoS₂. These materials have a layered or tunneled structure, and have a crystal structure that permits intercalation and deintercalation of lithium ions. Furthermore, the development of polyanion type metal oxides, organic sulfur compounds, etc., has been carried out.

On the other hand, for the negative electrode material, attempts to further increase the capacity of carbon materials and the development of metal lithium, alloy materials, metal oxides and nitride materials, etc. have been carried out.

However, although a lithium secondary battery using metalic lithium as the negative electrode has a high energy density, it has a problem in terms of safety because dendrites are deposited on the negative electrode during charging, and the dendrites may break through the separator, reach the positive electrode and cause internal short circuiting as a result of repeated charging and discharging. Moreover, the deposited dendrites react in its surface with a solvent in the electrolyte and cause a lowering of the electronic conductivity, and consequently the internal resistance of the battery is increased and isolated particles exist, resulting in a decrease in the charging and discharging efficiency. For these reasons, lithium secondary batteries using metalic lithium as the negative electrode material have problems for their safety and short-cycle.

As the positive electrode material, in view of the high capacity and light weight, organic sulfur compounds have been focused. As an organic material that would achieve a high energy density, organic disulfides are proposed in the United States Patent No. 4,833,048. These compounds are represented, in the most simplified form, by M⁺-⁻S-R-S⁻-M⁺, wherein R is an aliphatic or aromatic organic group, S is sulfur, and M⁺ is proton or metal cation. Such compounds are polymerized in such a form

M⁺-⁻S-R-S-S-R-S-S-R-S⁻-M⁺

by bonding to each other through S-S bonds by electrolytic oxidation. The thus formed polymer is regenerated into the original monomers by electrolytic reduction. A metal-sulfur secondary battery constructed by combining an organic disulfide compound with a metal M that supplies and captures cations (M⁺) is proposed in the above United States Patent.

It can be expected that these batteries will have an energy density as high as or higher than that of typical secondary batteries because these batteries use a metallic lithium negative electrode and have a battery operating voltage ranging from 3 to 4 V and an energy density of 150 Wh/kg or more. Furthermore, in order to further increase the energy density, the use of sulfur itself for the positive electrode to utilize the high-capacity characteristic of sulfur has been studied and proposed in the United States Patent No. 5,523,179. It is said that this battery uses a metallic lithium negative electrode, has an operating voltage of 2 V and is expected to achieve a high energy density between 100 and 800 Wh/kg.

However, in the case where sulfur is used for the positive electrode to achieve a high capacity, it is difficult to draw a large current because the oxidation-reduction reaction of sulfur is slow at room temperature. Moreover, when a battery is constructed using metallic lithium for the negative electrode, only a low battery voltage of about 2 V is obtained. When such a battery is operated under room temperature, there is a disadvantage that only a low operating voltage of 2 V or less is obtained because of the slow oxidation-reduction reaction and high electrode reaction resistance. In addition, there is a problem that such a battery has poor charge-discharge cycle characteristics.

In recent years, the possibility of achieving a high capacity and a high voltage is increased by the use of a mixture of sulfur and an organic sulfur compound (T. Sotomura and N. Oyama, Proc. 194th ECS meeting (1998, Boston)). This system has both a high voltage of an organic sulfur compound and a high capacity of sulfur, and can give high performance while compensating for the demerits of sulfur and organic sulfur compound in their single phase.

In this case, a sulfur-containing composite electrode/metallic lithium combination is considered for the battery system, and lithium is intercalated into the sulfur-containing composite electrode, which does not originally contain lithium, by a discharge reaction. However, the problems of the metallic lithium negative electrode as mentioned above have not yet been solved, and thus this battery system has some problems for practical use in such a situation.

Therefore, a combination of a sulfur-containing composite electrode with a carbon material which has given satisfactory results may be considered, but, in this case, since both of the electrodes do not contain lithium, a process of intercalating lithium into either of the materials first is required. In other words, even when a high-capacity sulfur based material is prepared, the process of intercalating lithium needs to be performed during the manufacture of the battery. Moreover, if the positive electrode capacity density is too large with respect to the negative electrode capacity density, when a battery is constructed, a good capacity balance can not be achieved unless the content of the positive electrode material in the battery is reduced. Hence, there is a problem that the resultant battery can not make the best use of the high capacity characteristic. Besides, there is a problem that, when the thickness of the negative electrode is increased, the rate characteristic at charging is impaired.

Additionally, in a method of preparing sulfur composite materials by mixing a sulfur powder with an organic sulfur compound in a dissolved state, aggregation or isolation of sulfur occurs, thereby resulting in a decrease in the capacity and deterioration of the cycle.

Meanwhile, examples of known high-capacity materials for the negative electrode include alloy materials of Si, Sn and Al, and metal oxide materials, such as SiO, SnO, SnO₂, SrSnO₃ and Li₂SnO₃. Although these materials have a high capacity, they have a problem that the amount of deintercalated lithium is smaller with respect to the amount of intercalated lithium for the first time. Moreover, with cycle repetition, lithium gradually accumulates in the negative electrode, causing problems, such as a decrease in the capacity and a short life characteristic.

On the other hand, lithium-containing composite nitrides have been focused as the high-capacity materials for the negative electrode. Conventionally, as the nitrides of lithium, lithium nitride (Li₃N) as a solid electrolyte has been often studied. Since this lithium nitride has no electronic conductivity though it has ionic conductivity, it has been considered as an electrolyte rather than an active material. However, it has been recently discovered that so-called lithium-containing composite nitrides provided with electronic conductivity by addition of other metal components to Li₃N function as electrode active materials. While materials of this kind were formerly reported in V. W. Sachsze, et al., Z. Anorg. Chem. p278 (1949) (hereinafter referred to as "reference 1") and T. Asai, et al., Mat. Res. Bull. vol. 16, p1377 (1984), a study of them as the active materials for batteries has just been started.

As the reports on the active materials for batteries among this kind of materials, there are Li₃FeN₂ obtained by adding Fe to Li₃N (M. Nishijima, et al., J. Solid State Chem., vol. 113, p205 (1994) (hereinafter referred to as "reference 2")); Li₇MnN₄ obtained by adding Mn to Li₃N (M. Nishijima, et al., J. Electrochem. Soc. Vol. 141, p2966 (1994) (hereinafter referred to as "reference 3")); Li₃₋ₓCoₓN obtained by adding Co to Li₃N (M. Nishijima, et al., Solid State Ionics vol. 83, p107 (1996) (hereinafter referred to as "reference 4") and T. Shoudai, et al., Solid State Ionics vol. 86-88, p785 (1996)). Moreover, it has been known that the proposal to use this kind of materials as the electrode materials is made in Japanese Laid-Open Patent Publication Nos. 7-78609, 7-320720, 9-22697.etc.

The lithium-containing composite nitrides can be expressed by the general formula Li_{α}M_{β}N, wherein M is a metal component other than lithium, α is a variable indicating the amount of Li that varies upon charge and discharge, and β is a constant indicating the substitution amount of M. For example, lithium nitridocobaltate is a compound obtained by mixing predetermined amounts of a lithium nitride powder and a metallic cobalt powder and aging the mixture under a nitrogen atmosphere at 700°C, wherein a part of lithium in Li₃N is substituted with cobalt, so that the synthesized product is a non-stoichiometric compound represented by Li_{3-β}Co_{β}N as α=3-β. In this case, β is a positive real number of no greater than 3.

In the case of lithium nitridoferrate, the synthesized product is a stoichiometric compound represented by Li₃FeN₂ obtained by mixing predetermined amounts of a lithium nitride powder and metalic iron and aging the mixture in a nitrogen flow at 900°C. The stoichiometric ratio of the elements in these resulting lithium-containing composite nitrides varies depending on the mixing ratio of lithium and metal, the crystal structure, etc. Examples of reported lithium-containing composite nitrides other than those-mentioned above include Li₃₋ₓNiₓN, Li₃₋ₓCuₓN (reference 1), Li₃BN₂, Li₅SiN₃, LiSi₂N, LiMgN (H. Yamane et al., J. Power Sources, 20(1987)311), Li₆WN₄, Li₆MoN₄, Li₆CrN₄ (A. Gudat et al., Z. Naturfosch, B45(1990)111), Li₃Sr₃Ni₄N₄ (A. Gudat et al., Z. Anorg. Allg. Chem., 597(1991)61), Li₄FeN₂ (P. Hoehn et al., Angew. Chem. Int. Ed Engl., 30(1991)61), Ba₂(Ni₁₋ₓLiₓ), and Ni₂N₂ (A. Gudat et al., Z. Anorg. Chem., 597(1992)8).

If the above-mentioned synthesized lithium-containing composite nitrides are represented by the general formula Li_{α}M_{β}N containing one nitrogen atom, for example, Li₄FeN₂, they are all expressed by Li₂Fe_{0.5}N. None of these lithium-containing composite nitrides have α exceeding 3. The reason for this is that the nitrogen in the compounds acts as a trivalent anion, and the sum of the valence of lithium or metal element other than lithium functioning as the corresponding cation does not exceed 3. In the one and only case, α=3 is achieved in Li₃N which does not contain metal other than lithium, but 3<α is always satisfied in the lithium-containing composite nitrides according to the present invention. Moreover, in the research of the application of the lithium-containing composite nitrides disclosed in references 2-4 to the negative electrode active materials for lithium batteries, charging and discharging are usually started in a direction of releasing lithium ions from the synthesized lithium-containing composite nitrides. In other words, during the operation of this battery, the content of lithium is maximum at the time of synthesis, and charging and discharging are repeated by releasing lithium from this state and absorbing lithium again. In this case, the operating electrode potential of the lithium-containing composite nitride during charging and discharging is between 0 and 1.5 V relative to lithium. According to the conventional structures including references 2-4, in any occasion during the operation of the battery, α, which represents the content of lithium in the lithium-containing composite nitride, is smaller than 3(α<3) in the charge-discharge operation range. In other words, it is considered that, in a direction of further absorbing (charging) lithium from the state at the synthesis, i.e., in a direction of increasing the value of α representing the content of lithium, α becomes larger than 3(3<α) in which the balance of the ion valence with nitrogen as the trivalent anion is lost, a range lower than a normal reference electrode potential of lithium is used, and consequently a deposition reaction of lithium occurs and the reversibility is impaired.

For this reason, in the case where this lithium-containing composite nitride electrode is used as the negative electrode and LiCoO₂ is used as the positive electrode, since lithium is intercalated into both of the positive electrode and negative electrode, it is necessary to deintercalate lithium in either of the electrodes. In other words, even when a high-capacity lithium-containing nitride material is prepared, it is necessary to perform a process of deintercalating lithium during the manufacture of a battery. Moreover, if the negative electrode capacity density is too large with respect to the positive electrode capacity density, a good capacity balance is not obtained in the manufacture of a battery unless the content of the negative electrode material in the battery is reduced. Hence, there is a problem that the resulting battery can not make the best use of the high-capacity characteristic. Furthermore, there is a problem that, when the thickness of the positive electrode is increased, the rate characteristic at discharging is impaired.

On the other hand, apart from the high capacity aspect, in the safety aspect, high-voltage batteries have risks that the voltage becomes too high upon overcharge, a gas is generated by decomposition of the electrolyte, the internal pressure of the batteries is increased, and consequently rupture and leakage of electrolyte occur. In addition, there is a problem that the life is shortened for the above reasons.

It is an object of the present invention to provide a lithium battery capable of achieving a high energy density at a low voltage, by solving the above-mentioned problem that the high capacity characteristic is not effectively used because of pre-processes of intercalation and deintercalation of lithium for the electrode and the capacity balance matching between the positive and negative electrodes and by further solving the risks resulting from high voltage.

### Disclosure of Invention

A lithium battery of the present invention uses a composite electrode composition comprising sulfur or lithium-containing sulfur represented by the formula (LiₓS)ₙ, wherein 0<x≦2 and n is a natural number, and a metal complex of an organic sulfur compound having a thiol group or thiolate group in the molecule as a positive electrode active material, and uses a lithium-containing composite nitride represented by the general formula Li₃₋ₓMₓN, wherein M represents at least one transition element selected from the group consisting of Ti, V, Cr, Mn, Fe, Co, Ni and Cu, and x is a real number within a range of 0.1≦x≦0.8, as a negative electrode active material.

It is preferred that the composite electrode composition for the positive electrode further comprises at least one of a conductive polymer and an organic sulfur compound having a thiol group or thiolate group in the molecule.

The conductive polymer is preferably at least one selected from the group consisting of polyaniline, polypyrrole, polyacene, polythiophene and polyacetylene.

The metal that forms the metal complex is preferably at least one selected from the group consisting of Cu, Ag, Au, Ni, Pd, Pt, Co, Rh, Ir, Cr, Mn and Fe.

It is preferred that the negative electrode further comprises an alloy or a metal oxide.

The alloy is preferably a solid solution or an intermetallic compound formed from at least one of Sn and Si and at least one element selected from the group consisting of the group 2 elements, transition elements, group 12, group 13 elements and group 14 elements in the periodic table.

The metal oxide is preferably at least one selected from the group consisting of SiO, SnO, SnO₂, SrSnO₃ and Li₂SnO₃.

### Best Mode for Carrying Out the Invention

A lithium battery according to the present invention uses a sulfur-containing composite electrode composition comprising sulfur or lithium-containing sulfur for the positive electrode active material and a lithium-containing composite nitride for the negative electrode active material, respectively, and comprises a nonaqueous electrolyte. The nonaqueous electrolyte may be a liquid, a polymer electrolyte or a gel electrolyte.

In a preferred mode, the present invention provides a lithium battery including a positive electrode comprising a metal complex of an organic sulfur compound having a thiol group in the molecule and sulfur; a negative electrode comprising a lithium-containing composite nitride represented by the general formula Li₃₋ₓMₓN, wherein M is at least one transition element selected from the group consisting of Ti, V, Cr, Mn, Fe, Co, Ni and Cu, and 0.1≦x≦0.8; and a lithium ion conductive nonaqueous electrolyte. In this mode, it is preferred that the positive electrode further comprises at least one of a conductive polymer and an organic sulfur compound having a thiol group in the molecule.

According to another preferred mode, the present invention provides a lithium battery including a positive electrode comprising a lithium-containing sulfur represented by the formula (LiₓS)ₙ , wherein 0<x≦2 and n is a natural number, and a metal complex of an organic sulfur compound having a thiolate group in the molecule; a negative electrode comprising at least one of an alloy and a metal oxide, and a lithium-containing composite nitride represented by the general formula Li_{3-y}M_{y}N, wherein M is at least one transition element selected from the group consisting of Ti, V, Cr, Mn, Fe, Co, Ni and Cu, and 0.1≦y≦0.8; and a lithium ion conductive nonaqueous electrolyte. In this mode, it is preferred that the positive electrode further comprises at least one of a conductive polymer and an organic sulfur compound having a thiolate group in the molecule.

First, the following description will describe the positive electrode of a lithium battery of the present invention.

A sulfur-containing composite electrode serving as the positive electrode is formed from a composite electrode composition comprising sulfur or lithium-containing sulfur and a metal complex of an organic sulfur compound having a thiol group or thiolate group in the molecule. Since this positive electrode comprises sulfur or lithium-containing sulfur and a metal complex of an organic sulfur compound (hereinafter referred to as "M-SS"), it achieves a larger capacity compared with a composite electrode consisting only of an organic sulfur compound (hereinafter referred to as "SS") and polyaniline (hereinafter referred to as "PAn"). Although sulfur has a large theoretical capacity of 1675 Ah/kg, it has poor reversibility in the oxidation-reduction reaction under room temperature and a low utilization of 20% or less. However, if sulfur is used in a composite form with the M-SS and further with the SS and PAn, it has a high utilization of 80% or more and high reversibility. Moreover, when only sulfur is used, the electric potential with respect to metallic lithium is 2 V, but, when sulfur is combined with the M-SS and further with the SS and PAn, a high electric potential of 3 V or more will result. Furthermore, PAn is doped with (poly) thiolate anions of the M-SS and SS and (poly) thiolate anions of sulfur to form a conductor. Hence, in the composite electrode of the present invention, the electron transferring path is formed at a molecular level, so that the oxidation-reduction reaction can proceed smoothly.

The M-SS as one of the components constituting the composite electrode not only functions as an active material by itself, but also performs the function of preventing the SS and the complex of the SS and PAn from dissolving in the electrolyte and dissipating from the positive electrode. It is therefore possible to obtain a long charge-discharge cycle life. Furthermore, the composite electrode of the present invention produces a more flat voltage compared with a composite electrode consisting only of the SS and PAn.

For M in the M-SS, it is desired to use metals such as Cu, Ag, Au, Ni, Pd, Pt, Co, Rh, Ir, Cr, Mn and Fe, which are susceptible to a change of the valence of ion. With the change of the valence of metal ion, not only oxidation-reduction for monomerization and polymerization, but also the change of the valence of metal ion is incorporated in the oxidation-reduction reaction, thereby contributing to an increase in the charge-and-discharge capacity. In particular, Cu is suitably used. For the SS in the M-SS, it is possible to use a compound represented by the general formula (R(S)_{y})ₙ. R is an aliphatic group or aromatic group, S is sulfur, y is an integer of no less than 1, and n is an integer of no less than 2. It is possible to use dithioglycol represented by HSCH₂CH₂SH, 2,5-dimercapto-1,3,4-thiadiazole represented by C₂N₂S(SH)₂, s-triazine-2,4,6-trithiol represented by C₃H₃N₃S₃, 7-methyl-2,6,8-trimercaptopurine represented by C₆H₆N₄S₃, and 4,5-diamino-2,6-dimercaptopyrimidine represented by C₄H₆N₄S₂. As these compounds, commercially available products may be used as they are. It is also possible to use polymers including dimer and tetramer of the SS polymerized by a chemical polymerization process using an oxidizing agent, such as iodine, potassium ferricyanide and hydrogen peroxide, or by an electrolytic oxidation process. Further, as the SS, it is also possible to use polycarbon disulfide represented by (CSₓ)ₙ wherein x = 0.5 to 2 and n = 2 or higher number.

With the use of a metal salt containing the above-mentioned M and the SS, it is possible to form the M-SS. As the salt forming the metal complex, it is possible to use those described below. In the case of copper salts, it is possible to use divalent copper salts, such as cupric chloride and copper N,N-diethylcarbamate (((C₂H₅)₂NCSS)₂Cu), and monovalent copper salts obtained by reducihg the cupric chloride or the like with SO₂. Further, in the case of silver salts, it is possible to use monovalent silver salts, such as silver nitrate, silver N,N-diethylcarbamate ((C₂H₅)₂NCSSAg), silver trifluoromethansulfonate (CF₃SO₃Ag), and silver borofluoride (AgBF₄). As other metal salts, it is possible to use similar substances. In order to form a complex from the SS and a metal salt, it is possible to use a method of mixing an ethanol solution of an SS compound and an ethanol solution of a metal salt as shown in later-described examples, or other methods. Various kinds of metal complexes may be mixed, or a metal complex formed from two or more kinds of metal salts may be used. Examples of the complexes formed from the SS, copper salt and silver salt include CuAg(C₂HN₂S₃)₄ obtained when the SS is 2,5-dimercapto-1,3,4-thiadiazole; CuAg(C₂H₂S₂)₄ obtained when the SS is dithioglycol; Cu₃Ag₃(C₃N₃S₃)₄ obtained when the SS is s-triazine-2,4,6-trithiol; CuAg(C₆H₄N₄S₃)₄ obtained when the SS is 7-methyl-2,6,8-trimercaptopurine; and CuAg(C₄H₄N₄S₂)₄ obtained when the SS is 4,5-diamino-2,6-dimercaptopyrimidine.

Alternatively, it is possible to lithiate a metal complex and use the resulting metal complex having a thiolate group. As the lithiating process, it is possible to use a chemical treatment performed in a solution of R·Li, wherein R is an aliphatic group or aromatic group, such as butyl lithium and phenyl lithium, or an electrochemical lithium intercalation treatment.

As sulfur, a commercially available sulfur powder is used. The purity is preferably no less than 99.9%. The particle diameter of the powder is preferably 10 µm or less.

Examples of lithium sulfide as the lithium-containing sulfur include Li₂S, Li₂S₂, Li₂S₄, Li₂S₅, Li₂S₆, Li₂S₈, and Li₂S₁₂, which can be obtained by a method, such as the reduction of lithium sulfate, oxidation of lithium hydrogensulfide, and chemical conversion treatment of sulfur. Among them, Li₂S and Li₂S₂ are known as substances that are obtained in a solid state in a stable manner. The rest of them are known as polysulfide solutions in which ions exist. Further, it is also possible to use lithium-containing sulfur ((SLi_{z})ₘ; 0<z<2, m is 2 or higher number) which is present in a non-stoichiometric state, such as chain sulfur containing lithium, rather than in a stoichiometric state as mentioned above. These substances may be used alone or in a mixed state. In the case of lithium sulfide and lithium-containing sulfur, it is possible to use the lithium sulfide and lithium-containing sulfur from the start point, or employ a method in which, after mixing sulfur and the M-SS, the lithiating process is performed.

In any case, by using lithium sulfide or lithium-containing sulfur as the starting material, it is possible to prevent a decrease in the capacity and degradation of the cycle characteristic due to sulfur-sulfur aggregation or isolation of sulfur in comparison with the electrode formed by simply mixing sulfur.

As the conductive polymer, it is possible to use polyaniline, polypyrrole, polyacene, polythiophene, polyacetylene, etc. which may be used alone or in combination, and it is more suitable to use soluble polyaniline described below. For the polyaniline, one obtained by polymerizing aniline or its derivative by a chemical polymerization method or electrolytic polymerization method is used. Reducing polyaniline in a de-doped state is particularly preferable because it effectively captures the organic disulfide monomers. The reduction degree index (RDI) of polyaniline is given by an electron-absorption spectrum ratio of a solution resulting from dissolving a small amount of polyaniline in N-methyl-2-pyrrolidone. In other words, the RDI can be expressed by a ratio (RDI = I₆₄₀/I₃₄₀) of the intensity (I₆₄₀) of the absorption peak attributable to a quinone diimine structure appeared on the long wavelength side in the vicinity of 640 nm to the intensity (I₃₄₀) of the absorption peak attributable to a para-substituted benzene structure appeared on the short wavelength side in the vicinity of 340 nm. Polyaniline with the RDI of 0.5 or less is suitably used. The de-doped degree of polyaniline is expressed by the conductivity. Polyaniline with a conductivity of 10⁻⁵S/cm or less is suitably used.

The proportion of sulfur to M-SS is 0.1 to 10 parts by weight, more preferably 0.5 to 5 parts by weight, of sulfur to 1 part by weight of the M-SS. A preferred total proportion of the SS and/or polyaniline is between 0.01 and 10 parts by weight based on 1 part by weight of the M-SS. In the case where the SS and polyaniline are mixed, they are preferably mixed in the proportion of 0.01 to 10 parts by weight of polyaniline to 1 part by weight of the SS.

To the composite electrode of the present invention, it is possible to add an electrolyte containing metal cations M⁺. As such an electrolyte, it is preferable to use a polymer electrolyte in a solid state or semi-solid state in which diffusion of the organic disulfide monomers less easily occurs. Examples of the polymer electrolytes which are used effectively include polymer solid electrolyte obtained by dissolving lithium salts such as LiClO₄, LiCF₃SO₃ and LiN(CF₃SO₂)₂ in polyethylene oxide; and polymer electrolytes in a semi-solid state resulting from gelation of electrolytes obtained by dissolving lithium salts such as LiClO₄, LiCF₃SO₃, LiBF₄, LiPF₆ and LiN(CF₃SO₂)₂ in nonaqueous solvents such as propylene carbonate and ethylene carbonate with polymers such as polyacrylonitrile, polyvinylidene fluoride, polyacrylic acid and polyethylene oxide.

Furthermore, in order to facilitate the formation of a film and obtain a high film strength, it is possible to add an organic polymer binder, such as polyvinyl pyrrolidone, polyvinyl alcohol, polyvinyl pyridine and polyvinylidene fluoride, to the composite electrode of the present invention. Additionally, a conductive agent may be added to further increase the conductivity. Examples of such a conductive agent include carbon powders and fibers, such as graphite powder, acetylene black powder and graphite fibers.

Next, the following description will explain the negative electrode of a lithium battery of the present invention.

The lithium-containing composite nitride of the negative electrode is a composite nitride with a hexagonal crystal structure, represented by the general formula Li₃₋ₓMₓN, wherein M is at least one transition element selected from the group consisting of Ti, V, Cr, Mn, Fe, Co, Ni and Cu, and x is a real number within a range of 0.1≦x≦0.8.

As a method of synthesizing the lithium-containing composite nitride, it is possible to use a method in which, first, predetermined amounts of the powder of lithium nitride (Li₃N) and the powder of a transition metal as a substituting species are mixed as the starting material, and then the resulting mixture is sintered in a high-purity nitrogen atmosphere. For example, when M in Li₃₋ₓMₓN is Co and y=0.4, the lithium-containing composite nitride is synthesized by mixing the Li₃N powder and the Co powder so that the atomic ratio of Li and Co is 2.6:0.4, placing them in a crucible after sufficiently mixing them, and sintering the mixture in a high-purity (no less than 99.9%) nitrogen atmosphere at 700°C for 8 hours. This active material is basically synthesized in the form of Li_{2.6}Co_{0.4}N since a part of Li in Li₃N as the base is replaced with Co. In addition, commercially available reagents may be used as the powders of Li₃N and Co, and the smaller the particle diameter of the Co powder, the more even the mixed state and the better the quality of the synthesized product. The Co powder with a mean particle diameter of 5 µm is particularly preferable. After sintering, the mass of the material sintered in the nitrogen atmosphere is sufficiently pulverized using a mortar to obtain the active material powder.

There is also a method in which a Li-M based alloy is prepared as the starting material and subjected to nitriding by a heat treatment in a nitrogen atmosphere. In this case, if Co is used as M in the Li/Co ratio of 2.6/0.4, it is possible to obtain Li_{2.6}Co_{0.4}N product. Moreover, like the above, after sintering, the mass of the material sintered in the nitrogen atmosphere is sufficiently pulverized using a mortar to obtain the active material powder.

Here, while the examples using Co are illustrated, the active material can be synthesized in the similar manner by the use of other kind of transition metal as M. Besides, since this active material is highly reactive to water and easily oxidized, it is desirable to perform the process from sintering to pulverization in a sufficiently dry inert atmosphere such as a nitrogen atmosphere.

Next, the alloy used for the negative electrode contains at least Sn or Si as the component element and other component element that is at least one kind of element selected from the group consisting of the group 2 elements, transition elements, group 12 elements, group 13 elements and group 14 elements in the periodic table, and this at least one kind of element forms a solid solution or intermetallic compound with Sn or Si. This alloy is manufactured by either of the following methods: a method in which, after synthesizing the alloy in a metallurgy manner in a vacuum melting furnace, the alloy is pulverized; alloying methods such as mechanical alloying; methods such as a roll quenching method and gas atomizing method in which the alloy is synthesized through a thermodynamically non-equilibrium state.

Typical examples of metal oxides for use in the negative electrode include SiO, SnO, SnO₂, SrSnO₃ and Li₂SnO₃. While commercially available materials are used as these materials, it is also possible to synthesize these materials in order to increase the purity. The synthesizing methods include an oxidation reaction by heating in the air; and coprecipitating, for example, hydroxides from a solution, and either of the methods may be used.

According to a preferred embodiment of the present invention, by using a mixture of a material containing no lithium originally, such as an alloy and metal oxide, and a material originally containing lithium, such as a lithium-containing composite nitride, for the negative electrode, it is possible to optimize the content of lithium in the negative electrode. In other words, lithium deintercalated from the lithium-containing composite nitride is not directly intercalated into the positive electrode, but is captured into the alloy or metal oxide in the vicinity. It is therefore possible to solve such a problem as the adjustment of the lithium content, which must be solved for the respective materials.

In particular, the problems related to the capacity and voltage are solved for the respective materials by combination with a sulfur based organic compound positive electrode containing lithium sulfide, thereby providing lithium batteries having good cycle characteristics and high energy density.

While some examples of the present invention will be described below, the present invention is not limited to these examples.

### Example 1

First, a positive electrode was fabricated by a method as described below.

A solution A was prepared by dissolving 0.76 g (6 millimole) of iodine in 50 ml of ethanol, and a solution B was prepared by dissolving 1.02 g (6 millimole) of copper(II) chloride dihydrate (CuCl₂•2H₂O) in 25 ml of ethanol. The solutions A and B were mixed to prepare a mixed solution C. Moreover, a solution D was prepared by dissolving 1.8 g (12 millimole) of 2,5-dimercapto-1,3,4-thiadiazole (hereinafter referred to as "DMcT") in 50 ml of ethanol and mixed with the previously prepared solution C, and consequently a reddish orange complex was produced as a solid material. The solution containing this solid material was centrifuged to extract the solid material, and then the solid material was washed with hot alcohol several times. Finally, after washing the solid material with ethyl ether, it was vacuum-dried to obtain a complex Cu(C₂HN₂S₃)₂ (hereinafter referred to as "DMcT-Cu") in which two molecules of DMcT were coordinated to a copper ion. 1 g of this DMcT-Cu powder, 1 g of sulfur, 0.25 g of acetylene black powder and 0.15 g of acrylonitrile/methyl acrylate copolymer powder (the copolymerization mole ratio = 95/5, the number average molecular weight = 400,000) were pulverized and mixed. Meanwhile, an electrolyte was prepared by dissolving 1 M of LiBF₄ and 0.5 M of LiPF₆ in an ethylene carbonate/dimethyl carbonate mixed solvent (the volumetric ratio = 1:1). 3.0 g of this electrolyte was added to the above-mentioned mixture and mixed, and the resulting mixture was rolled by heat press rollers at 75°C and finally compression-bonded onto a current collector of 30µm thick titanium foil.

Next, a negative electrode was fabricated by a method as described below.

A lithium-cobalt alloy with a Li/Co mole ratio of 2.6/0.4 was placed in a copper container and retained at 300°C for 24 hours in a nitrogen atmosphere to react with nitrogen. After the reaction, the resulting blackish gray compound was pulverized to obtain lithium-cobalt composite nitride powder. This synthesized sample was subjected to a powder X-ray diffraction measurement using CuKα ray. As a result, a diffraction pattern based on a hexagonal structure that was the same as lithium nitride (Li₃N) appeared, and thus it was confirmed that Co was incorporated in lithium nitride to form a single phase of solid solution.

25 parts by weight of graphite powder as a conductive agent and 5 parts by weight of polytetrafluoroethylene powder as a binder were added to 100 parts by weight of the active material powder thus produced, and, after mixing them sufficiently, the resulting mixture was rolled into a film by rollers.

### Example 2

First, a positive electrode was fabricated by a method as described below.

Polyaniline (available in the trade name "ANILEAD" from Nitto Denko Corp., hereinafter referred to as "PAn") was de-doped in an alkaline solution and then reduced with hydrazine to obtain PAn in a de-doped and reduced state. This PAn in a de-doped and reduced state had a conductivity of 10⁻⁸S/cm and an RDI value of 0.26. A solution E was prepared by dissolving 1.5 g of DMcT in 10 g of N-methyl-2-pyrrolidone (hereinafter referred to as "NMP"). 1.0 g of the previously prepared PAn powder in a de-doped and reduced state was added to this solution E to obtain a viscous bluish green DMcT-PAn-NMP solution. Next, 0.35 g of divalent anhydrous copper chloride (CuCl₂), 1.0 g of sulfur and 5 g of NMP were added to the previously prepared DMcT-PAn-NMP solution to obtain a viscous ink. A current collector of 30µm thick titanium foil was cut into a size of 5×8 cm, and the previously prepared ink was applied to this titanium foil current collector and dried in a vacuum at 80°C for 2 hours.

Meanwhile, a negative electrode was fabricated by a method as described below.

Lithium nitride and Co powder were mixed so that the mole ratio of Li/Co was 2.6/0.4, and sintered in a nitrogen atmosphere at 700°C for 8 hours. After the reaction, the resulting blackish gray compound was pulverized to obtain a lithium-cobalt composite nitride powder. This synthesized sample was subjected to a powder X-ray diffraction measurement using CuKα ray. As a result, a diffraction pattern based on a hexagonal structure that was the same as lithium nitride (Li₃N) appeared, and thus it was confirmed that Co was incorporated in lithium nitride to form a single phase of solid solution.

25 parts by weight of graphite powder as a conductive agent and 5 parts by weight of polytetrafluoroethylene powder as a binder were added to 100 parts by weight of the active material powder thus produced, and, after mixing them sufficiently, the resulting mixture was rolled into a film by rollers.

### Comparative Example 1

As Comparative Example 1, a graphite/LiCoO₂ battery was prepared.

First, as the positive electrode material, a mixture of 90 parts by weight of a usually used LiCoO₂ active material powder, 5 parts by weight of acetylene black as a conductive agent and 5 parts by weight of polytetrafluoroethylene as a binder was prepared. Next, as the negative electrode material, one obtained by mixing a graphite active material powder, a binder and carboxymethyl cellulose in the weight ratio of 100:3:2 was prepared.

### Comparative Example 2

As Comparative Example 2, a battery comprising graphite/lithiated sulfur based composite electrode was prepared.

A lithiating process was carried out by dipping the DMcT-Cu powder produced in Example 1 in a n-hexane solution of n-butyl lithium (1.53 mole/L). Thereafter, the powder was sufficiently washed with n-hexane. In this manner, Cu(C₂LiN₂S₃)₂ (hereinafter referred to as "L-DMcT-Cu") in which -S-H group was changed to -S-Li group was obtained. 1 g of this L-DMcT-Cu powder, 1 g of the gel electrolyte solution produced in Example 2, 1 g of a polysulfide solution and 0.05 g of acetylene black were mixed to obtain a mixed slurry. After applying this slurry to a porous carbon sheet, it was heated in a vacuum at 70°C. In this manner, the positive electrode was fabricated.

Next, the same graphite negative electrode as that prepared in Comparative Example 1 was prepared.

### Comparative Example 3

As Comparative Example 3, a Li-deintercalated Li-containing composite nitride/LiCoO₂ battery was prepared.

First, a LiCoO₂ positive electrode produced in the same manner as in Comparative Example 1 was prepared.

Next, a solution F was prepared by adding a predetermined amount of iodine to dehydrated acetonitrile. The lithium-containing composite nitride obtained in Example 2 was added to this solution F, stirred and filtrated. After the filtration, a powder from which Li was deintercalated to form LiI was obtained.

With the use of the positive electrodes and negative electrodes obtained in Examples 1, 2 and Comparative Examples 1 to 3 and the gel electrolyte for the electrolyte, 5×8 cm rectangular, 5 mm thick batteries A, B, C, D and E were produced. The thickness of the gel electrolyte was 0.3 mm. The gel electrolyte was obtained by gelling 20.7 g of a solution of polypropylene carbonate and ethylene carbonate mixed in the volumetric ratio of 1:1 in which 1 M of LiBF₄ was dissolved, with 3.0 g of polyacrylonitrile. The batteries were produced by placing the positive electrode, gel electrolyte and negative electrode one upon another, connecting leads to the positive and negative electrodes, and vacuum-packaging them with an aluminum laminate resin film. The sizes of the batteries were unified in a single size.

These batteries were repeatedly charged and discharged at a constant current of 1 mA at 20°C. Then, the volume energy density was calculated by defining the discharge capacity (unit: mAh) at the fifth cycle as the battery capacity and dividing the product of the battery capacity and the battery voltage during charging by the battery volume, and the weight energy density was calculated by dividing the product by the battery weight. The results are shown in Table 1.

**Table 1**

| Battery | | Volume energy density(Wh/L) | Weight energy density(Wh/kg) | Battery voltage(V) |
|---|---|---|---|---|
| A | Example 1 | 410 | 220 | 2.4 |
| B | Example 2 | 450 | 260 | 2.4 |
| C | Comparative Example 1 | 250 | 130 | 3.7 |
| D | Comparative Example 2 | 290 | 170 | 3.1 |
| E | Comparative Example 3 | 350 | 170 | 3.0 |

It was clearly appreciated from the results that the batteries using the electrodes of the examples according to the present invention had a much higher volume energy density and weight energy density compared with the batteries using the electrodes of the comparative examples. Although the battery voltage of Examples 1 and 2 was lower than that of the comparative examples, these batteries can correspond to a lowering of the drive voltage of equipments and effectively take advantage of the high-capacity characteristics. Moreover, it can be appreciated that, since the battery voltage is low, decomposition of the electrolyte upon overcharge does not occur and safety is ensured.

Furthermore, Examples 1 and 2 have the merit of producing batteries by preparing electrodes without the lithium intercalation and deintercalation processes which are performed in Comparative Examples 2 and 3.

In other words, it can be clearly appreciated from Table 1 and the manufacturing processes that, according to the present invention, it is possible to obtain highly safe batteries having a good capacity balance and low-voltage, high-energy density characteristics by simple processes.

Next, the rate characteristics of the respective batteries were measured.

The charge capacity and discharge capacity of the batteries A, B, C, D and E of Examples 1, 2 and Comparative Examples 1, 2 and 3 were measured at 20°C and the charge and discharge rates of 0.1C, 0.5C, 1C and 2C, respectively. The results of the charge capacity and the results of the discharge capacity are shown in Tables 2 and 3, respectively.

**Table 2**

| Battery | Charge Capacity (mAh) | | | |
|---|---|---|---|---|
| | Charge rate (C) | | | |
| | 0.1 | 0.5 | 1 | 2 |
| A | 3.4 | 3.4 | 3.3 | 3.2 |
| B | 3.8 | 3.8 | 3.7 | 3.6 |
| C | 1.4 | 1.4 | 1.3 | 1.3 |
| D | 1.9 | 1.8 | 1.5 | 0.9 |
| E | 2.3 | 2.2 | 2.1 | 2.0 |

It can be appreciated from Table 2 that the batteries A, B and C have almost no decrease in the charge capacity even at high rates and thus have excellent rate characteristics. However, the batteries A and B have a large battery capacity, while the battery C has a small battery capacity. On the other hand, the capacity of the batteries D and E decreases as the rate increases. In particular, the battery D has a considerable decrease in the capacity. It is considered that the batteries D and E have poor characteristics with respect to the rate because their electrodes have different thickness. It is considered that, since the negative electrode of the battery D is designed to be thick, the battery D has a particularly poor charge rate characteristic.

**Table 3**

| Battery | Charge capacity (mAh) | | | |
|---|---|---|---|---|
| | Charge rate (C) | | | |
| | 0.1 | 0.5 | 1 | 2 |
| A | 3.4 | 3.4 | 3.3 | 3.2 |
| B | 3.8 | 3.8 | 3.7 | 3.6 |
| C | 1.4 | 1.4 | 1.3 | 1.3 |
| D | 1.9 | 1.8 | 1.7 | 1.6 |
| E | 2.3 | 2.0 | 1.7 | 1.4 |

It can be appreciated from Table 3 that the batteries A, B and C have almost no decrease in the discharge capacity even at high rates and thus have excellent rate characteristics. However, the batteries A and B have a large battery capacity, while the battery C has a small battery capacity. On the other hand, the capacity of the batteries D and E decreases as the rate increases. In particular, the battery E has a considerable decrease in the capacity. It is considered that the batteries D and E have poor characteristics with respect to the rate because their electrodes have different thickness. It is considered that, since the positive electrode of the battery E is designed to be thick, the battery E has a particularly poor discharge rate characteristic.

It was appreciated from these results that the lithium batteries of the present invention have a high capacity and excellent rate characteristics.

### Example 3

First, a positive electrode active material was produced.

First, a lithiating process was performed by dipping the DMcT powder in a n-hexane solution of n-butyl lithium (1.53 mole/L) for 30 minutes. Thereafter, the powder was sufficiently washed with n-hexane. In this manner, C₂Li₂N₂S₃ (hereinafter referred to as "L-DMcT") in which -S-H group was changed to -S-Li group was obtained.

Subsequently, after dissolving 1.8 g of L-DMcT in 10 g of N-methyl pyrrolidone, 1.0 g of PAn powder in the de-doped and reduced state which was the same as that used in Example 2 was added to obtain a bluish green viscous L-DMcT-PAn-NMP solution A'. Next, 0.35 g of divalent anhydrous copper chloride (CuCl₂) was dissolved in 5 g of NMP to prepare a solution B'. Moreover, 1 g of lithium sulfide Li₂S and 0.7 g of sulfur S were dissolved in 5 g of NMP to produce a polysulfide solution C'. These solutions A', B' and C' were mixed to obtain a viscous ink. This ink was applied to a titanium foil and vacuum-dried at 80°C for 2 hours to prepare the positive electrode.

Next, a negative electrode active material was produced.

First, Fe₂Sn was synthesized. An Fe powder and an Sn powder were mixed in the mole ratio of 2/1, and mechanical alloying was performed using a ball mill made of stainless steel. By performing mechanical alloying for 1 week, the peek of Sn disappeared and the broad peak of Fe shifted in the X-ray diffraction, thereby producing a state in which Sn formed a solid solution with Fe.

This active material powder Fe₂Sn, and Li_{2.6}Co_{0.4}N produced in the same manner as in Example 1 were mixed in the weight ratio of 1:1. Then, 25 parts by weight of graphite powder as a conductive agent and 5 parts by weight of polytetrafluoroethylene powder as a binder were added to 100 parts by weight of this mixed active material powder, and, after mixing them sufficiently, the resulting mixture was rolled into a film by rollers.

### Example 4

A positive electrode was prepared in the same manner as in Example 1.

For the SiO as the negative electrode active material, a powder obtained by pulverizing a commercially available reagent was used. This powder was used after drying it in a vacuum at 250°C for 5 hours.

The powder SiO and the Li_{2.6}Co_{0.4}N powder produced in the same manner as in Example 1 were mixed in the weight ratio of 1:1. Then, 25 parts by weight of graphite powder as a conductive agent and 5 parts by weight of polytetrafluoroethylene powder as a binder were added to 100 parts by weight of this mixed active material powder, and, after mixing them sufficiently, the resulting mixture was rolled into a film by rollers.

### Example 5

A positive electrode was prepared in the same manner as in Example 3.

For a negative electrode, in the same manner as in Examples 3 and 4, the Fe₂Sn powder, SiO powder and Li_{2.6}Co_{0.4}N powder were prepared. Then, Fe₂Sn:SiO:Li_{2.6}Co_{0.4}N were mixed in the weight ratio of 1:1:2. Subsequently, 25 parts by weight of graphite powder as a conductive agent and 5 parts by weight of polytetrafluoroethylene powder as a binder were added to 100 parts by weight of this mixed active material powder, and, after mixing them sufficiently, the resulting mixture was rolled into a film by rollers.

### Comparative Example 4

As Comparative Example 4, a Li/S+(DMcT-Cu)+PAn battery was prepared.

First, a positive electrode was prepared.

1.5 g of DMcT was dissolved in 10 g of NMP. 1.0 g of PAn powder in the de-doped and reduced state which was the same as that used in Example 2 was added to this solution to obtain a bluish green viscous DMcT-PAn-NMP solution. Next, 0.35 g of divalent anhydrous copper chloride (CuCl₂), 1.0 g of sulfur and 5 g of NMP were added to the previously prepared DMcT-PAn-NMP solution to obtain a viscous ink. This ink was applied to a current collector of titanium foil and dried in a vacuum at 80°C for 2 hours.

For the negative electrode, metalic lithium was used as it is.

### Comparative Example 5

As Comparative Example 5, a Fe₂Sn/LiCoO₂ battery was prepared.

First, as the positive electrode material, a mixture of 90 parts by weight of a usually used LiCoO₂ active material powder, 5 parts by weight of acetylene black as a conductive agent and 5 parts by weight of polytetrafluoroethylene powder as a binder was prepared.

Next, as the negative electrode material, a material was prepared by mixing Fe₂Sn powder similar to that prepared in Example 1, a binder and carboxymethyl cellulose in the weight ratio of 100:3:2.

### Comparative Example 6

As Comparative Example 6, a SiO/LiCoO₂ battery was prepared.

First, LiCoO₂ positive electrode produced in the same manner as in Comparative Example 5 was prepared.

Next, a solution E was produced by adding a predetermined amount of iodine to dehydrated acetonitrile. The lithium-containing composite nitride obtained in Example 2 was added to this solution E, stirred and filtrated. After the filtration, a powder from which Li was deintercalated to form LiI was obtained.

### Comparative Example 7

As Comparative Example 7, a Li_{2.6}Co_{0.4}N/V₂O₅ battery was prepared.

First, commercially available V₂O₅ was heated in a vacuum at 200°C for 5 hours. Subsequently, the positive electrode was produced by a mixture of 90 parts by weight of V₂O₅ active material powder, 5 parts by weight of acetylene black as a conductive agent and 5 parts by weight of polytetrafluoroethylene powder as a binder.

Next, the Li_{2.6}Co_{0.4}N prepared in Example 1 was used as the negative electrode material.

The batteries of Examples 3 to 5 and Comparative Examples 4 to 7 produced in the same manner as above were repeatedly charged and discharged at a constant current of 1 mA at 20°C. The discharge capacity was measured for the respective charge-discharge cycles. The results are shown in Table 4. The average voltage, the initial discharge capacity, and the capacity maintenance ratio given by the ratio of the initial discharge capacity and the discharge capacity after 100 cycles are shown.

**Table 4**

| | Average battery voltage (V) | Initial discharge capacity | Capacity maintenance ratio (1st/100th) |
|---|---|---|---|
| | | mAh | % |
| Example 3 | 2.6 | 1470 | 97 |
| Example 4 | 2.6 | 1630 | 95 |
| Example 5 | 2.6 | 1750 | 96 |
| Comparative Example 4 | 3.2 | 1960 | 5 |
| Comparative Example 5 | 3.4 | 700 | 30 |
| Comparative Example 6 | 3.4 | 1000 | 15 |
| Comparative Example 7 | 2.6 | 600 | 50 |

It can be appreciated from the above results that the batteries using the electrodes of the examples according to the present invention have a higher discharge capacity and higher capacity maintenance ratio compared with the batteries using the electrodes of the comparative examples. In other words, it can be appreciated that batteries having good cycle characteristics and high energy density are obtained by the present invention.

In the above-described examples, while materials obtained by using DMcT as the starting material were used as the metal complex and lithium-containing metal complex, other organic sulfur compounds may be used.

Moreover, in Examples 2 and 3, while NMP was used for the preparation of the positive electrode, a commercially available reagent may be used as it is or after reducing moisture to 20 ppm or less by a zeolite absorbent. Alternatively, it is possible to use pyrrolidone, N-ethyl-2-pyrrolidone, N-buthyl-2-pyrrolidone, etc.

As the current collector of the positive electrode, while the titanium foil was used in the examples, it is possible to use a carbon sheet, a foil of metals, such as aluminum, copper and stainless steel, a film of conductive polymer such as polyaniline and polypyrrole, a metal foil or a carbon sheet painted or coated with a conductive polymer film.

For the negative electrode material, while lithium-containing composite nitrides using Co were prepared in the examples, it is possible to use other transition metals, such as Ti, V, Cr, Mn, Fe, Ni and Cu. Alternatively, it is possible to use two kinds of transition elements selected from the group consisting of these elements containing Co.

The batteries according to the present invention are used as the primary batteries and secondary batteries.

### Industrial Applicability

According to the present invention, as described above, it is possible to provide batteries which are safe but have high energy density compared with conventional lithium batteries. Moreover, with the use of combinations of electrodes of the present invention, it is possible to omit lithium intercalation and deintercalation processes and provide lithium batteries having excellent rate characteristics.

## Claims

1. A lithium battery comprising:
a positive electrode comprising sulfur or lithium-containing sulfur represented by the formula (LiₓS)ₙ, wherein 0<x≦2 and n is a natural number, and a metal complex of an organic sulfur compound having a thiol group or thiolate group in the molecule;
a negative electrode comprising a lithium-containing composite nitride represented by the general formula Li₃₋ₓMₓN, wherein M is one transition element selected from the group consisting of Ti, V, Cr, Mn, Fe, Co, Ni and Cu, and 0.1≦x≦0.8; and
a lithium ion conductive nonaqueous electrolyte.

2. The lithium battery as set forth in claim 1, wherein the positive electrode further comprises at least one of a conductive polymer and an organic sulfur compound having a thiol group or thiolate group in the molecule.

3. The lithium battery as set forth in claim 1,
wherein the negative electrode further comprises at least one of an alloy and a metal oxide.

4. The lithium battery as set forth in claim 3,
wherein said alloy is a solid solution or an intermetallic compound formed from at least one of Sn and Si and at least one selected from the group consisting of the group 2 elements, transition elements, group 12 and group 13 elements and group 14 elements in the periodic table.

5. The lithium battery as set forth in claim 3, wherein said metal oxide is one selected from the group consisting of SiO, SnO, SnO₂, SrSnO₃ and Li₂SnO₃.
